# EUROPEAN PATENT SPECIFICATION

(11) **EP 0 507 296 B1**
(45) Date of publication and mention of the grant of the patent: **06.09.1995**
(21) Application number: 92105691.7
(22) Date of filing: 02.04.1992
(51) Int. Cl.: B21B 1/08, B21D 5/08, B21H 8/00, E04B 1/41, F16B 37/04

(54) **A channel, manufacture of the channel and fastener for use with the channel**
Profilschiene, ihre Herstellung und mit ihr verwendbares Befestigungselement
Rail profilé, sa fabrication et élément de fixation utilisable avec ce rail

(30) Priority: 05.04.1991 GB 9107233
(43) Date of publication of application: 07.10.1992
(73) Proprietor: HADLEY INDUSTRIES PLC, Warley, West Midlands B66 2PA (GB)
(72) Inventor: Deeley, Geoffrey Thomas, Oldbury, West Midlands B68 0NS (GB)
(74) Representative: Lally, William

(56) References cited:
- EP-A- 0 136 264
- WO-A-90/04127
- GB-A- 2 050 549
- GB-A- 2 061 788
- GB-A- 2 147 838

## Description

The present invention relates to the manufacture of a channel by roll-forming a strip of metal stock and is concerned with a method wherein marginal portions of the stock are worked so that a substantially complementary row of alternating projections and depressions is formed on each marginal portion of the stock. Generally, the marginal portions of the stock are worked by respective rolls, each having depressions and projections alternating around the circumference of the roll. We refer to such rolls herein as "knurling rolls". Knurling rolls are used to provide a channel with inwardly facing formations which cooperate with formations on other elements introduced into the channel during use, for example nuts and bolt heads, to inhibit movement of those other elements relative to the channel after assembly with the channel. Examples of channels having such formations are disclosed in GB-A-2061788 and GB-A-2050549.

There is a requirement to ensure that each projection in one row of projections provided in a channel is aligned with a corresponding projection of another row provided in the same channel. The rows of projections cannot conveniently be formed after the channel has been formed to the required cross sectional shape. It has therefore been proposed to apply respective knurling rolls to opposite edges of the flat stock and to connect the rolls to each other by means of a transmission which ensures that the rolls turn in a precisely coordinated manner. In GB-A-2061788, it is disclosed that the knurling rolls are connected to each other by a belt and pulley transmission. It has also been proposed to use a chain and sprocket transmission for the same purpose. A method according to the pre-characterising part of claim 1 is disclosed in GB-A-2147838

According to the present invention, a method of forming a channel is proposed, which includes the combination of features set out in claim 1.

It will be appreciated that, if the respective rows of formations on the marginal portions of the stock are formed by a single knurling roll, then the required positional relation between the formations of one row and the formations of the other row will necessarily be maintained throughout the length of the channel. Alternatively, a pair of knurling rolls which are keyed to a common shaft can be used to achieve the same result in a similar manner.

During formation of the rows of formations by the knurling roll or rolls, the marginal portions of the stock may be mutually parallel and perpendicular to an intermediate portion of the stock.

The respective rows of formations are preferably formed on the marginal portions when those marginal portions are inclined to an intermediate portion of the stock at an angle substantially less than 90° but substantially greater than 0°. The envelope of the knurling rolls or of those parts of the knurling roll which engage the marginal portions of the stock is preferably cylindrical. In this case, the knurling roll or rolls act primarily on each marginal portion at a corner between an edge and a major face of the marginal portion.

Further developments of the invention according to claim 1 are disclosed in dependent claims 2 to 6.

An example of a method embodying the invention will now be described, with reference to the accompanying drawings, wherein:
**FIGURES 1 to 3** show the transverse cross sectional shape of metal stock during successive stages of the operation of forming a channel from the stock, Figure 2 including parts of rolls which act on the stock,
**FIGURE 4** shows the partly formed channel, having the cross sectional shape illustrated in Figure 3, together with a partial illustration of further rolls (knurling rolls) which act on the material and parts associated with those rolls,
**FIGURE 5** illustrates a cross section through the material on the line V-V of Figure 4, after the rolls of Figure 4 have acted on the material,
**FIGURES 6 to 9** show the transverse cross sectional shape of the material during further stages of the operation of forming the channel and
**FIGURE 10** shows, on an enlarged scale, a partial cross section through the channel, a nut and a bolt which are used in combination with the channel.

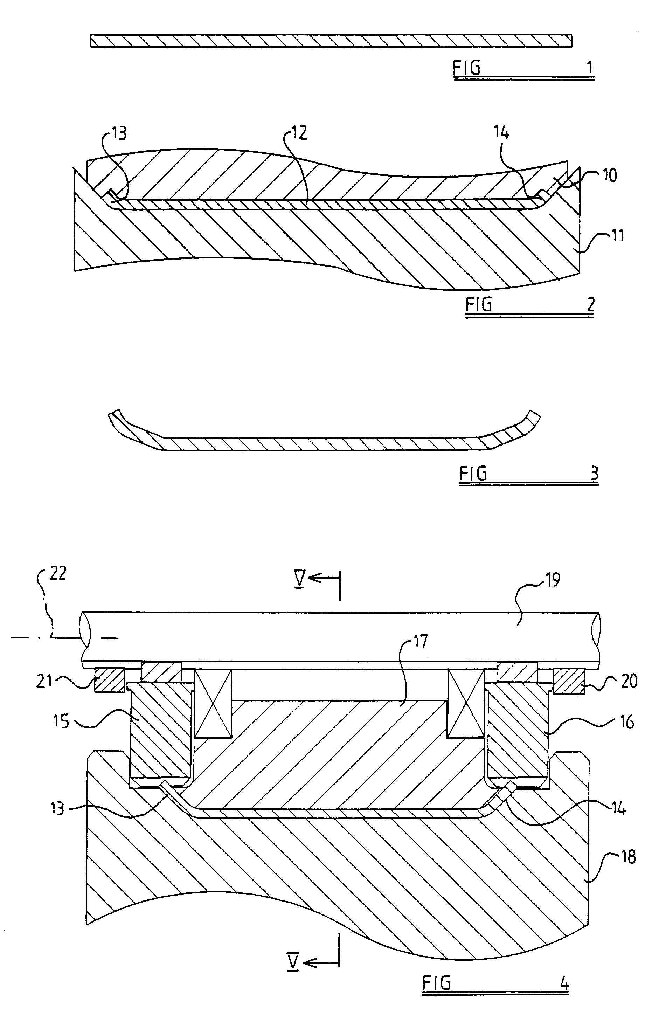

In the method illustrated in the accompanying drawings, the channel is formed from flat, strip-metal stock, the transverse cross section of which is shown in Figure 1. Typically, the thickness of the stock may be one to three millimetre. The stock is worked by a number of sets of rolls arranged to constitute a roll-forming line. At least some of the rolls are driven. The general arrangement of the roll-forming line, including the means for driving the rolls, is well-known and is not described herein.

Respective parts of a pair of rolls 10, 11 near to a beginning of the line are represented in Figure 2. These rolls bend opposite marginal portions of the stock in the same direction from the general plane of the stock through angle which is considerably less than 90°. As shown, one of the rolls (the roll 10) may be formed to engage the opposite edges of the stock 12, so that the stock is not free to expand laterally under pressure exerted by the rolls on the stock. Alternatively, the rolls illustrated in Figure 2 may be modified so that the opposite edges of the stock are not engaged by the rolls. The application of pressure to the stock by the rolls may then deform the stock in a manner to cause the stock to expand laterally.

It will be appreciated that when opposite lateral portions of flat stock are bent in the same direction, as represented in Figure 2, metal at the inside of the bends will be compressed and metal at the outside of the bends will be stretched. Usually, there will be a line extending from one edge of the stock to the opposite edge through the thickness of the material which is neither lengthened nor shortened by the bending operation. A line drawn from edge to edge on one surface of the material, the outside surface, will be longer than this line and a line drawn on the opposite surface of the material from edge to edge will be shorter than the intermediate line. References herein to the width of the material are to the length of a line drawn from one edge of the material to an opposite edge at a position which is mid-way between the opposite, major faces of the material.

Figure 3 illustrates the stock after it has been worked by a further pair of rolls (not illustrated). This further pair of rolls continue the bending of the lateral portions 13, 14 of the stock towards, but not to a perpendicular relation to an intermediate portion of the stock. Again, the rolls of Figure 3 may be arranged to avoid change in the width of the stock during working by those rolls.

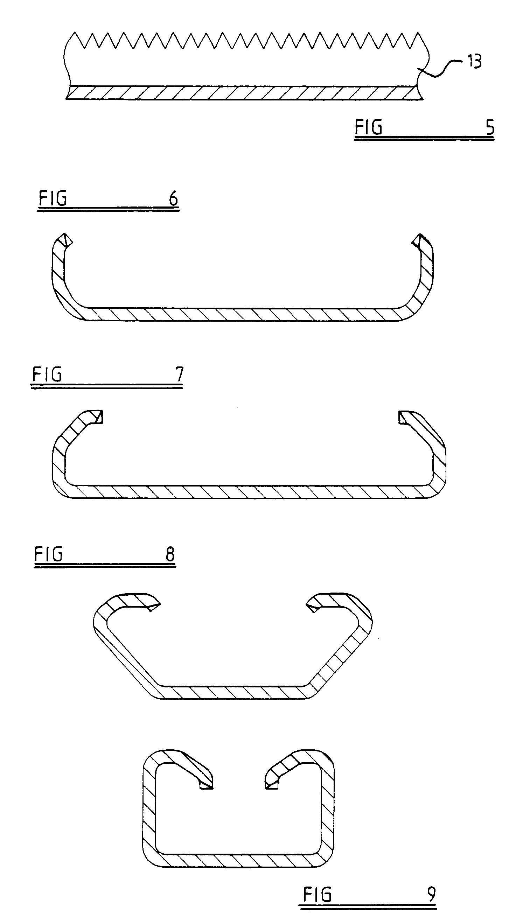

In Figure 4, there are shown respective parts of a pair of knurling rolls 15 and 16 which engage the edges of the lateral portions 13, 14 to form on these portions respective rows of depressions and projections. One of these rows of formations is shown in profile in Figure 5. In the example illustrated, the projections have the form of pointed teeth. Also, in the example illustrated, there is on each of the lateral portions 13, 14 a single row of projections. Figure 4 also shows parts of rolls 17 and 18 which support the stock during working by the knurling rolls 15 and 16.

The knurling rolls 15 and 16 are mounted on a common shaft 19 which is driven by known driving means (not shown). The knurling rolls are both keyed to the shaft 19 and movement of the rolls along the shaft is prevented by a pair of collars 20 and 21 which are secured to the shaft. The roll 17 lies between the knurling rolls 15 and 16.

Both of the knurling rolls 15 and 16 exert pressure on the metal stock in the same direction, that is a direction away from the axis 22 of the shaft 19. The lateral portions 13 and 14 are supported by the roll 18 against deflection away from the axis 22 under the pressure exerted by the knurling rolls.

It will be noted that the initially flat stock has edges which are substantially perpendicular to the major faces of the stock. Since, when worked by the knurling rolls 15 and 16, the lateral portions 13 and 14 of the stock are inclined to the axis 22 at an angle which is considerably less than 90°, each knurling roll engages with a corner of the corresponding lateral portion of the stock, this corner being between an edge of the stock and a major face of the stock. The depressions formed on each lateral portion extend substantially completely across the edge of that lateral portion and extend a significant distance across the major face of the stock, that is the face which is presented towards the axis 22. The opposite major face of the stock, which will be the outside face of the channel, is not deformed or disturbed significantly by the knurling rolls. The bottom of each depression is substantially rectilinear and is inclined to the edge of the lateral portion in which it is formed and to the adjacent major faces of the lateral portion.

The arrangement illustrated in Figure 4 may be modified by incorporating the knurling rolls 15 and 16 in the roll 17. With this arrangement the two lateral portions of the stock would be worked by a single roll to form the rows of projections, as shown in Figure 5. Both this alternative arrangement and the arrangement shown in Figure 4 ensure that each projection of one row is exactly aligned with a corresponding projection of the other row.

After the rows of projections shown in Figure 5 have been formed, the material is passed through further sets of rolls which progressively change the shape of the transverse cross section as represented in Figures 6 to 9. It will be seen that, in the final form of the channel shown in Figure 9, the rows of projections are directed towards the interior of the channel. The channel is used in the same manner as the channel disclosed in the published specifications mentioned hereinbefore.

One use of the finished channel is to anchor nuts. For this purpose, the channel may be attached rigidly to a further structure or incorporated in a further structure, for example a wall or a roof. The channel may be incorporated in a structure which is cast of concrete in situ. For this purpose, the channel may be provided additionally with anchoring elements (not shown) which will be embedded in the concrete. To anchor a nut, the nut is introduced into the channel, conveniently at an end thereof, and is seated on the lateral portions 13 and 14 at the required position. Generally, a bolt will be engaged with the nut before the nut is introduced into the channel. The bolt can then be tightened to draw the nut into firm engagement with the channel.

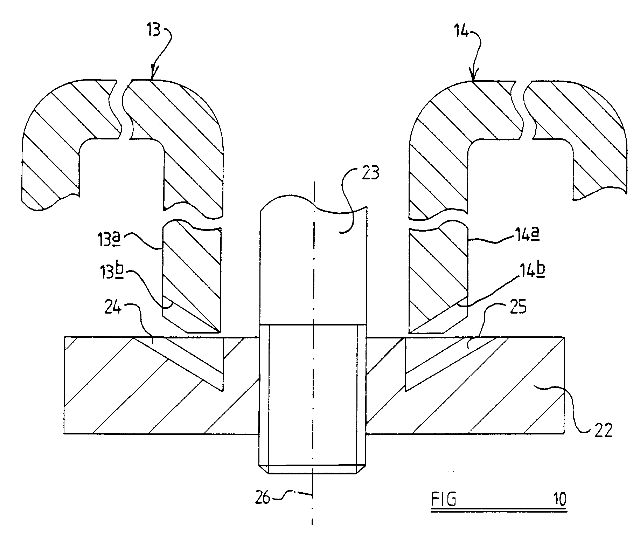

In Figure 10, there is illustrated a nut 22 and bolt 23 associated with the completed channel. The nut 22 has a row of alternating projections and recesses 24 complimentary to the row of formations on the lateral portion 13. This row is rectilinear and is arranged parallel to a tangent to the central opening of the nut. The row may be spaced from the central opening of the nut. A further row 25 of alternating projections and recesses is provided on the nut at the opposite side of the central opening from the row 24. The projections and recesses of the row 25 compliment the formations on the lateral portion 14 of the channel. The row 25 is also rectilinear and parallel to a tangent to the central opening of the nut.

Each of the projections of the row 24 has the form of a rectilinear ridge, the length of which is perpendicular to the length of the row 24. However, the apex of the ridge is inclined to an axis 26 of the thread of the nut. the inclination is substantially the same as the inclination of each crest of a projection on the lateral portion 13. The row 25 comprises a similar arrangement of projections having respective crests which are inclined to the axis 26. The angle at which the crest of each projection on the nut is inclined to the axis 26 is typically within the range 30° to 70°.

In an alternative use of the channel, the head of a bolt is introduced inside the channel. The head has two rows of alternating depressions and projections, each row being rectilinear and the rows being spaced apart to lie at opposite sides of a shank of the bolt. The crests of the projections in these rows are inclined to an axis of the bolt in the same manner as the crests of the projections of the rows 24 and 25 are inclined to the axis 26.

It will be understood that, during tightening of a nut and bolt associated with the channel, the formations of the channel cooperate with the formations of the nut or the bolt, as the case may be, to prevent turning of the nut or the bolt head inside the channel.

In some situations, the lateral portions 13 and 14 are exposed to view in the finished channel. It will be noted that, even when these lateral portions can be viewed through the open mouth of the channel, the projections and recesses on the lateral portions are concealed from view because they do not interrupt that surface of the lateral portion 13 which faces towards the lateral portion 14 in the finished channel.

Before bending the marginal portions of the flat stock, as shown in Figure 2, the corners between edges of the stock and major faces of the stock may be worked by suitable rolls to round these edges and remove any burrs or like sharp protuberances caused, for example, by slitting of the stock from a wider strip.

## Claims

1. A method of forming a channel by a roll-forming operation which includes the steps of (a) working substantially flat strip stock (12) to bend opposite unknurled marginal portions (13, 14) in the same direction out of the plane of the stock, then (b) applying to the marginal portions concurrently respective parts of a knurling roll or respective knurling rolls (15, 16) which rotate together about a common axis to form respective rows of formations on both of the marginal portions and subsequently bending the stock to turn the rows of formations inwards of the channel, characterised in that the rows of formations are formed only after the stock has been worked to bend opposite marginal portions in the same direction out of the plane of the stock.

2. A method according to Claim 1 wherein, during application of the knurling roll (15, 16) or rolls to the marginal portions (13,14), the angle included between the marginal portions is within the range 40° to 80°.

3. A method according to Claim 1 or Claim 2 wherein, during application of the knurling roll or rolls to the marginal portions, opposite major faces of the marginal portions are engaged by respective rolls.

4. A method according to claim 1 comprising the steps of further bending the stock to provide a channel comprising opposite side walls, an intermediate web extending between the side walls, respective outer webs on the side walls and respective lips (13a, 14a) on the outer webs, each lip extending from the associated outer web towards the intermediate web (12), wherein each lip has a row of alternating projections and recesses at an edge of the lip remote from the associated outer web and each recess comprises a face (13b, 14b) which is inclined to the intermediate web.

5. A method according to claim 4 in which a nut or headed fastener is inserted in, the channel, the nut or headed fastener being formed with first and second rows (24, 25) of formations engaged with formations of the rows (13, 14) of the channel and wherein the formations in the first row are inclined to the formations in the second row.

6. A method according to Claim 6 wherein the nut comprises opposite faces spaced apart in a direction along an axis of a thread of the nut, wherein and first and second rows of formations are provided by depressions at one of said faces, wherein said rows (24,25) lie at opposite sides of a central aperture of the nut and wherein the projections have respective crests which are inclined to the axis at an angle within the range 30° to 70°.

## Patentansprüche

1. Verfahren zur Bildung einer Profilschiene durch einen Walz- bzw. Wellformungsvorgang, der die Schritte umfaßt, (a) einen im Wesentlichen ebenen Materialstreifen (12) so zu bearbeiten, daß gegenüberliegende, ungerändelte Randabschnitte (13, 14) in die gleiche Richtung aus der Ebene des Materials gebogen werden, (b) anschließend entsprechende Teile einer Rändelrolle oder entsprechende Rändelrollen (15, 16), die sich zusammen um eine gemeinsame Achse drehen, gleichzeitig an die Randabschnitte anzulegen, um die jeweiligen Reihen von Ausbildungen auf beiden Randabschnitten auszubilden, und nachfolgend das Material zu biegen, um die mit Ausbildungen versehenen Reihen zum Inneren der Profilschiene zu drehen, dadurch gekennzeichnet, daß die mit Ausbildungen versehenen Reihen gebildet werden, unmittelbar nachdem das Material in der Weise bearbeitet worden ist, daß gegenüberliegende Randabschnitte in die gleiche Richtung aus der Materialebene gebogen sind.

2. Verfahren nach Anspruch 1, dadurch gekennzeichnet, daß beim Anlegen der Rändelrolle (15, 16) oder -rollen an die Randabschnitte (13, 14) der zwischen den Randabschnitten eingeschlossene Winkel im Bereich von 40° bis 80° liegt.

3. Verfahren nach Anspruch 1 oder 2, dadurch gekennzeichnet, daß beim Anlegen der Rändelrolle oder -rollen an die Randabschnitte gegenüberliegende Hauptseitenflächen der Randabschnitte von den jeweiligen Rollen in Eingriff genommen werden.

4. Verfahren nach Anspruch 1 umfaßt die Schritte, das Material weiter zu biegen, um eine Profilschiene mit gegenüberliegenden Seitenwänden, einem sich zwischen den Seitenwänden erstreckenden Zwischensteg, jeweiligen äußeren Stegen an den Seitenwänden sowie jeweiligen Rändern (13a, 14a) an den äußeren Stegen zu schaffen, wobei sich jeder Rand von dem zugehörigen äußeren Steg in Richtung Zwischensteg (12) erstreckt, und wobei jeder Rand eine Reihe von abwechselnd Vorsprüngen und Vertiefungen an einer Kante des Randes aufweist, die von dem zugehörigen äußeren Steg abgewandt ist, und jede Vertiefung eine gegenüber dem Zwischensteg geneigte Fläche (13b, 14b) aufweist.

5. Verfahren nach Anspruch 4, dadurch gekennzeichnet, daß eine Mutter oder ein Befestigungselement mit einem Kopf in die Profilschiene eingesetzt wird, wobei die Mutter oder das einen Kopf aufweisende Befestigungselement mit ersten und zweiten Reihen von Ausbildungen (24, 25) hergestellt sind, welche in die Ausbildungen der Reihen (13, 14) der Profilschiene einrücken, wobei die Ausbildungen der ersten Reihe gegenüber den Ausbildungen der zweiten Reihe geneigt sind.

6. Verfahren nach Anspruch 5, dadurch gekennzeichnet, daß die Mutter gegenüberliegende Seitenflächen aufweist, die mit einem in Richtung der Achse eines Gewindes der Mutter verlaufenden Abstand angeordnet sind, wobei mit Ausbildungen versehene erste und zweite Reihen mittels Vertiefungen auf einer der Seitenflächen vorgesehen sind, und wobei die Reihen (24, 25) auf gegenüberliegenden Seiten von einer Zentralen Öffnung der Mutter liegen, und die Vorsprünge jeweils Scheitel aufweisen, die zur Achse in einem Winkel im Bereich von 30° bis 70° geneigt sind.

## Revendications

1. Procédé pour former un profilé à gorge par une opération de laminage qui comporte les étapes suivantes : (a) l'usinage d'un matériau en bande sensiblement plat (12) pour plier des parties marginales non moletées opposées (13, 14) dans la même direction extérieure au plan du matériau, puis (b) l'application simultanée aux parties marginales de parties respectives d'un rouleau de moletage ou de rouleaux de moletage respectifs (15, 16) qui tournent ensemble autour d'un axe commun afin de former des rangées respectives de structures sur les deux parties marginales, et le pliage ultérieur du matériau pour diriger les rangées de structures vers l'intérieur du profilé, caractérisé en ce que les rangées de structures ne sont formées qu'après que le matériau ait été usiné de façon à plier les parties marginales opposées dans la même direction extérieure au plan du matériau.

2. Procédé selon la revendication 1, dans lequel, durant l'application du rouleau (15, 16) ou des rouleaux de moletage aux parties marginales (13, 14), l'angle inscrit entre les parties marginales est situé dans la plage comprise entre 40° et 80°.

3. Procédé selon la revendication 1 ou la revendication 2, dans lequel, durant l'application du rouleau ou des rouleaux de moletage aux parties marginales, les rouleaux respectifs viennent en prise avec les faces principales opposées des parties marginales.

4. Procédé selon la revendication 1, comportant les étapes de pliage ultérieur du matériau afin de réaliser un profilé comportant des parois latérales opposées, un plat intermédiaire s'étendant entre les parois latérales, des plats extérieurs respectifs sur les parois latérales et des lèvres respectives (13a, 14a) sur les plats extérieurs, chaque lèvre s'étendant depuis le plat extérieur associé en direction du plat intermédiaire (12), dans lequel chaque lèvre comporte une rangée de saillies et d'encoches alternées au niveau d'un bord de la lèvre éloigné du plat extérieur associé et chaque cavité comporte une face (13b, 14b) qui est inclinée vers le plat intermédiaire.

5. Procédé selon la revendication 4, dans lequel un écrou ou un dispositif de fixation à tête est inséré dans le profilé, l'écrou ou le dispositif de fixation à tête étant configuré avec des première et deuxième rangées (24, 25) de structures venant en prise avec des structures des rangées (13, 14) du profilé et dans lequel les structures dans la première rangée sont inclinées vers les structures dans la deuxième rangée.

6. Procédé selon la revendication 5, dans lequel l'écrou comporte des faces opposées espacées l'une de l'autre dans la direction d'un axe du filetage de l'écrou, dans lequel des première et deuxième rangées de structures sont constituées par des creux sur l'une desdites faces, dans lequel lesdites rangées (24, 25) se trouvent sur les faces opposées d'une ouverture centrale de l'écrou, et dans lequel les saillies comportent des crêtes respectives, qui sont inclinées par rapport à l'axe d'un angle situé dans la plage comprise entre 30° et 70°.
